# FASCICULE DE BREVET EUROPEEN

(11) **EP 1 640 631 B1**
(45) Date de publication et mention de la délivrance du brevet: **14.11.2007**
(21) Numéro de dépôt: 05018350.8
(22) Date de dépôt: 24.08.2005
(51) Int. Cl.: F16D 51/24, F16D 65/56

(54) **Dispositif de rattrapage automatique d'usure de frein à tambour et frein munis de ce dispositif**
Nachstellvorrichtung einer Trommelbremse und Trommelbremse mit einer solchen Vorrichtung
Slack adjuster for a drum brake and drum brake with said adjuster

(30) Priorité: 22.09.2004 FR 0410039
(43) Date de publication de la demande: 29.03.2006
(73) Titulaire: ROBERT BOSCH GMBH, 70442 Stuttgart (DE)
(72) Inventeur: Moirand, Bernard, 75019 Paris (FR); La, Laurent, 95400 Viller Le Belle (FR); Dupas, Christophe, 92700 Colombes (FR)
(74) Mandataire: Hurwic, Aleksander Wiktor

(56) Documents cités:
- GB-A- 863 057
- US-A- 3 017 962
- US-A- 3 797 613

## Description

La présente invention concerne un dispositif de rattrapage automatique d'usure de frein à tambour ainsi qu'un frein et un lot munis de ce dispositif.

Un frein à tambour comprend généralement une partie tournante, qui constitue à proprement parler le tambour, et une partie fixe comportant deux mâchoires munies de garnitures de friction, qui sont susceptibles d'être écartées l'une de l'autre pour venir s'appliquer contre la paroi interne cylindrique du tambour et ainsi ralentir la rotation de ce dernier.

On souhaite généralement éviter que l'usure des garnitures ne provoque entre les mâchoires et le tambour l'apparition d'un jeu qui aurait pour conséquence l'allongement des courses de la pédale de frein et du levier de frein à main, au détriment de la sécurité du véhicule.

Des freins à tambour munis de dispositif de rattrapage d'usure ont déjà été proposés dans US 3 017962 et GB 863 057. Par ailleurs, on a déjà proposé dans l'état de la technique d'équiper un frein à tambour d'un dispositif de rattrapage automatique d'usure, du type comportant
- une entretoise, destinée à relier des première et seconde mâchoires du frein à tambour, comportant au moins des première et deuxième parties montées déplaçables axialement l'une par rapport à l'autre, et
- des moyens de réglage de la longueur de l'entretoise par déplacement relatif axial des première et deuxième parties de l'entretoise.

Un dispositif de ce type est décrit notamment dans la demande de brevet européen publiée sous le numéro EP-A-0 104 102.

Ce type de dispositif a donné, et continue de donner, satisfaction.

On souhaite néanmoins pouvoir avertir le conducteur du véhicule de l'usure du frein au-delà d'un seuil correspondant à une réduction de l'efficacité du frein justifiant de ré-équiper ce frein en garnitures de friction, voire de le remplacer.

L'invention a notamment pour but d'alerter efficacement le conducteur de l'urgence de procéder au remplacement des pièces usées du frein.

L'invention a principalement pour objet un dispositif de rattrapage d'usure d'un frein à tambour tel que revendiqué dans les revendications 1 à 11 et un frein à tambour tel que revendiqué dans la revendication 11.

De ce fait, la course relative entre les première et deuxième parties de l'entretoise, dans le sens de l'allongement de cette entretoise, est limitée de manière à maintenir constante la longueur de l'entretoise après que l'usure des garnitures a atteint un seuil prédéterminé.

Ainsi, lorsque ce seuil est dépassé, l'usure des garnitures se poursuit sans que le jeu qui s'ensuit soit rattrapé.

Il en résulte un allongement de la course de la pédale de frein. Le conducteur interprète l'allongement de cette course comme étant une perte d'efficacité du frein si bien qu'il est incité à procéder au plus tôt au remplacement des pièces usées.

Il en résulte en outre un allongement de la course du levier de frein à main, ce qui constitue un second avertissement au conducteur.

Suivant d'autres caractéristiques optionnelles conformes à un mode de réalisation de l'invention ou à une variante de celui-ci :
- l'anneau est déformable élastiquement radialement et monté coulissant sur un rétrécissement formant un col ménagé sur la première partie de l'entretoise ;
- la première partie de l'entretoise est munie d'un corps cylindrique prolongé, à l'une de ses extrémités, par une tête qui se raccorde au corps par le col ;
- l'anneau est un jonc élastique, et le col présente:
   ■ une première portion cylindrique ayant un premier diamètre, adjacente à la tête de la première partie, ce premier diamètre étant sensiblement égal au diamètre intérieur du jonc en l'absence de sollicitation de ce jonc,
   ■ une seconde portion cylindrique d'un deuxième diamètre plus petit que ledit premier diamètre, adjacente au corps de la première partie, ce petit diamètre étant inférieur au diamètre intérieur du jonc de façon à autoriser le rétrécissement radial de ce jonc,
les portions de grand et petit diamètres étant reliées par une portion intermédiaire conique ;
- le col est cylindrique de diamètre sensiblement constant, et l'anneau est formé par une rondelle en tôle présentant une portion cylindrique, entourant le col, prolongée vers le corps par une portion conique déformable élastiquement ;
- les première et deuxième parties de l'entretoise sont en prise par vissage ;
- la deuxième partie de l'entretoise présente une première portion tubulaire dont la surface intérieure est filetée, prolongée par une seconde portion tubulaire dont la, surface intérieure est lisse et dont le diamètre intérieur est supérieur au diamètre intérieur de la première portion tubulaire, les première et seconde portions de la deuxième partie de l'entretoise sont reliées par l'épaulement formant butée, et le corps de la première partie de l'entretoise est fileté pour venir en prise par vissage avec la première portion de la deuxième partie de l'entretoise ;
- la première portion tubulaire présente une extrémité débouchante munie d'un chanfrein, et l'anneau présente une surface conique propre à coopérer avec ce chanfrein de manière à provoquer un rétrécissement radial de l'anneau pour permettre le vissage du corps de la première partie dans la première portion tubulaire de la deuxième partie ;
- les moyens de réglage comportent une roue dentée, solidaire en rotation de la première ou deuxième partie de l'entretoise, apte à coopérer avec un cliquet porté par une des mâchoires du frein ;
- l'entretoise comporte de plus une troisième partie montée rotative, relativement à la première ou deuxième partie de l'entretoise, autour d'un axe sensiblement parallèle à l'axe d'allongement de l'entretoise, la troisième partie de l'entretoise étant destinée à être montée sur l'une des mâchoires, la deuxième ou première partie de l'entretoise étant destinée à être reliée respectivement à l'autre des mâchoires ;
- la roue dentée est délimitée par un épaulement d'appui axial destiné à coopérer avec un épaulement d'appui axial complémentaire délimitant une extrémité de la troisième partie de l'entretoise.

L'invention a également pour objet un frein à tambour pour véhicule automobile du type comportant deux mâchoires sensiblement diamétralement opposées par rapport à l'axe du tambour, destinées à être serrées contre ce tambour, **caractérisé en ce qu'**il comprend un dispositif de rattrapage automatique d'usure tel que défini ci-dessus, la première ou deuxième partie de l'entretoise étant reliée à une des mâchoires.

L'invention sera mieux comprise à la lecture de la description qui va suivre, donnée uniquement à titre d'exemple et faite en référence aux dessins annexés dans lesquels :
- la figure 1 est une vue de face d'un frein à tambour de véhicule automobile muni d'un dispositif de rattrapage automatique d'usure selon l'invention ;
- la figure 2 est une vue en coupe axiale de l'entretoise du dispositif de rattrapage d'usure de la figure 1, représentée en position d'allongement maximal ;
- la figure 3 est une vue analogue à la figure 2, représentant l'entretoise en position d'allongement réduit ;
- la figure 4 est une vue en coupe suivant le plan IV-IV de la figure 3 ;
- la figure 5 est une vue en coupe axiale, à une échelle agrandie, de l'entretoise des figures 2 à 4, représentant une première étape de l'assemblage de l'entretoise ;
- la figure 6 est une vue analogue aux figures 2 et 3, représentant une seconde étape de l'assemblage de l'entretoise ;
- la figure 7 est une vue analogue à la figure 5 montrant une variante de réalisation des moyens de blocage ;
- la figure 8 est une vue de face d'une rondelle des moyens de blocage selon la variante de la figure 7.

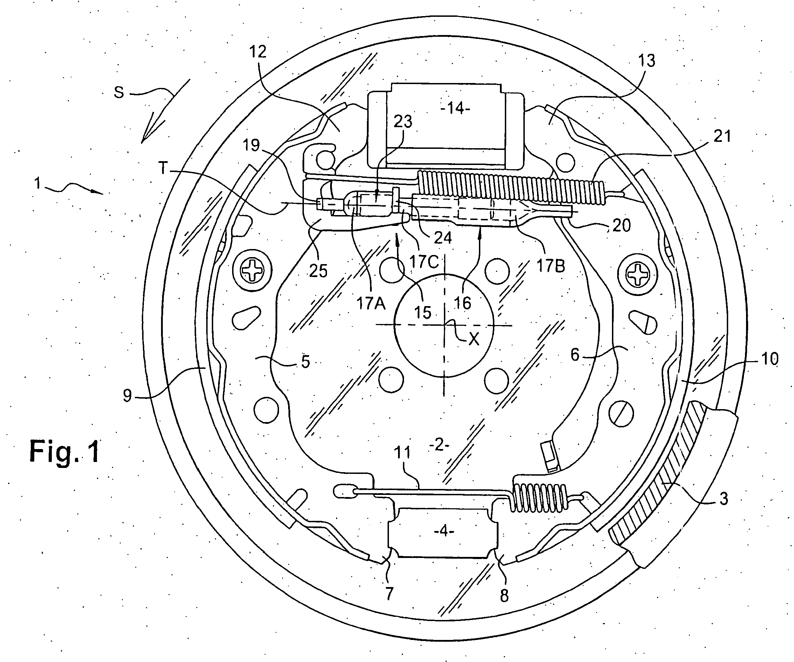

On a représenté sur la figure 1 un frein à tambour 1, pour véhicule automobile, comportant une plaque support fixe 2 ainsi qu'un tambour 3, d'axe X, porté par une roue du véhicule. Ce tambour 3 est partiellement représenté sur la figure 1.

La plaque support 2 est munie d'un bloc d'ancrage 4. Deux mâchoires de frein 5, 6, portées par la plaque support 2, sont munies d'extrémités d'appui 7, 8 montées pivotantes sur le bloc d'ancrage 4. Les mâchoires 5, 6, qui comportent chacune une garniture de friction 9, 10, sont maintenues en appui sur le bloc d'ancrage au moyen d'un premier ressort 11.

Les mâchoires 5, 6 sont également munies d'extrémités de manoeuvre 12, 13 coopérant avec un vérin hydraulique 14, encore appelé cylindre de roue. Ce vérin 14 est intercalé angulairement entre les mâchoires 5, 6 pour les écarter d'une position de repos, représentée sur la figure 1, vers une position de freinage dans laquelle les mâchoires 5, 6 coopèrent par friction avec le tambour 3.

Conformément à la terminologie habituelle et en considérant le sens de rotation du tambour 3 indiqué par la flèche S sur la figure 1, la mâchoire 5 est qualifiée de primaire et la mâchoire 6 est qualifiée de secondaire. Ces qualificatifs, primaire et secondaire, seront également utilisés, le cas échéant, pour repérer des organes portés par les mâchoires 5, 6 ou associés à ces mâchoires.

Comme cela est visible sur la figure 1, le frein 1 comporte en outre un dispositif 15 selon l'invention pour le rattrapage automatique de l'usure des garnitures 9, 10.

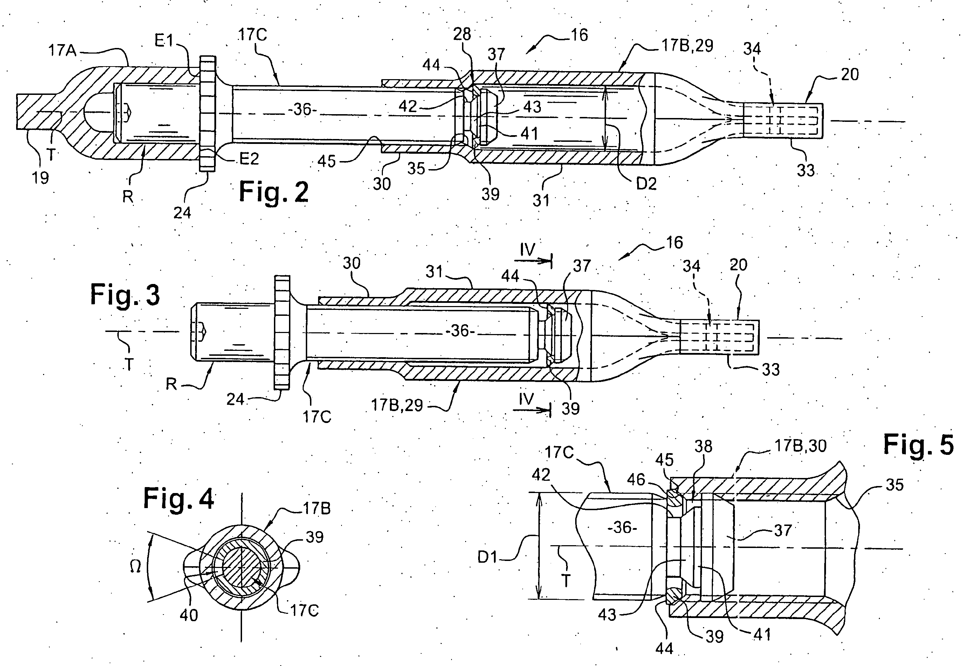

Ce dispositif 15, qui relie les deux mâchoires 5, 6, comprend une entretoise 16 représentée plus en détail sur les figures 2 à 6.

L'entretoise 16 comporte une partie primaire 17A reliée à la mâchoire primaire 5, une partie secondaire 17B reliée à la mâchoire secondaire 6 et une partie intermédiaire 17C reliant les parties primaire 17A et secondaire 17B entre elles.

L'entretoise 16 a une forme générale allongée d'axe T sensiblement orthogonal à l'axe X.

La partie intermédiaire 17C est montée rotative, relativement aux parties primaire 17A et secondaire 17B, autour de l'axe T qui est parallèle à la direction d'allongement de l'entretoise 16. Les parties primaire 17A et secondaire 17B sont fixes en rotation autour de l'axe T par rapport aux mâchoires correspondantes 5, 6.

Plus particulièrement, la partie intermédiaire 17C est montée tourillonnante dans la partie primaire 17A. Par contre, les parties secondaire 17B et intermédiaire 17C de l'entretoise 16 sont déplaçables axialement l'une par rapport à l'autre par vissage. Ces deux parties secondaire 17B et intermédiaire 17C sont en effet munies de filetages complémentaires représentés notamment sur les figures 2 et 3.

Chaque partie primaire 17A ou secondaire 17B de l'entretoise est reliée à la mâchoire 5, 6 correspondante à l'aide de moyens classiques, ménagés sur une extrémité de liaison 19, 20 de cette partie primaire 17A ou secondaire 17B, coopérant avec la mâchoire 5, 6 correspondante à proximité de son extrémité de manoeuvre 12, 13.

Un second ressort 21 travaillant en traction maintient ces mâchoires emboîtées dans les extrémités de liaison 19, 20 des parties primaire 17A et secondaire 17B (voir figure 1).

Le dispositif de rattrapage d'usure 15 comprend également des moyens 23 de réglage de la longueur de l'entretoise 16 par déplacement axial relatif (parallèlement à l'axe T) des parties secondaire 17B et intermédiaire 17C.

Les moyens de réglage 23, de type classique tel que décrit par exemple dans EP-A-0 104 102, comprennent une roue dentée 24, solidaire en rotation de la partie intermédiaire 17C, et un cliquet 25, monté pivotant sur la mâchoire primaire 5, en prise avec la roue 24 (voir figure 1). Le cliquet 25 est formé par une lame élastique. Le second ressort 21 est accroché de façon connue en soi, d'une part, sur le cliquet 25, porté par la mâchoire primaire 5, et d'autre part, sur la mâchoire secondaire 6, de façon à relier les extrémités de manoeuvre 12, 13 des mâchoires 5, 6.

La roue dentée 24 est délimitée par un épaulement d'appui axial E1 coopérant avec un épaulement d'appui axial complémentaire E2 délimitant une extrémité de la partie primaire 17A de l'entretoise 16 (voir figure 2).

Conformément à un fonctionnement classique des moyens de réglage 23, par exemple tel que décrit dans EP-A-0 104 102, lors d'une opération de freinage, le vérin 14 écarte les extrémités de manoeuvre 12, 13 des mâchoires 5, 6, ce qui provoque le déplacement de ces dernières vers leur position de freinage dans laquelle elles coopèrent par friction avec le tambour 3. Le cliquet 25 pivote alors dans un premier sens autorisant un entraînement éventuel de la roue 24 en rotation dans le sens de dévissage de la partie intermédiaire 17C par rapport à la partie secondaire 17B. Le dévissage de la partie intermédiaire 17C par rapport à la partie secondaire 17B provoque l'allongement de l'entretoise 16.

L'entraînement de la roue 24 dans son sens de dévissage et donc l'allongement de l'entretoise 16 ont lieu lorsque le déplacement centrifuge des mâchoires 5, 6 devient relativement important du fait de l'usure des garnitures 9, 10. En effet, dans ce cas, la course du cliquet 25 devient suffisante pour placer ce cliquet 25 en prise avec une dent de la roue 24 et ensuite entraîner cette roue 24 par coopération du cliquet 25 avec la dent avec laquelle il est en prise.

Lorsque l'opération de freinage cesse, les mâchoires 5, 6 sont rappelées élastiquement vers leur position de repos par les premier 11 et second 21 ressorts. Le cliquet 25 pivote alors dans un sens opposé au précédent autorisant son échappement de la roue dentée 24 de façon à conserver l'allongement de l'entretoise 16 qui a éventuellement eu lieu lors de l'opération de freinage précédente.

Cela permet de maintenir constante la course des mâchoires 5, 6 lors d'une opération de freinage, et donc de maintenir constante la course de la pédale de frein.

Toutefois, afin d'avertir le conducteur que l'usure des garnitures 9, 10 dépasse un seuil prédéterminé au-delà duquel il convient de remplacer ces garnitures, l'entretoise 16 comporte des moyens complémentaires de blocage 28, agencés sur les parties intermédiaire 17C et secondaire 17B, destinés à limiter l'allongement de l'entretoise 16.

Les moyens de blocage 28 permettent de limiter la course de la partie intermédiaire 17C par rapport à la partie secondaire 17B, de manière à maintenir constante la longueur de l'entretoise 16 après que l'usure des garnitures 9, 10 a atteint le seuil prédéterminé.

Comme cela est visible notamment sur la figure 2, la partie secondaire 17B présente un corps tubulaire 29 dans lequel est emboîtée la partie intermédiaire 17C. Le corps tubulaire 29 présente une première portion tubulaire 30, débouchant du côté de la partie intermédiaire 17C, prolongée par une seconde portion tubulaire 31 se rétrécissant à son extrémité opposée à la première portion 30 pour former, à l'extrémité 20, une patte 33 d'accrochage sur la mâchoire secondaire 6.

Comme cela est visible sur les figures 2 et 5, la première portion 30 est filetée et présente un diamètre intérieur D1 inférieur au diamètre intérieur D2 de la seconde portion 31, dont la surface intérieure est lisse. Les portions tubulaires 30 et 31 sont raccordées par un épaulement 35 annulaire de forme conique.

La partie intermédiaire 17C est munie d'un corps cylindrique fileté 36 dont le diamètre est complémentaire du diamètre D1 de la première portion 30 de la partie secondaire 17B. Le corps 36 est destiné à venir en prise par vissage avec la première portion 30 de la partie secondaire 17B.

La partie intermédiaire 17C est également munie d'une première extrémité formant tourillon R d'emboîtement dans la partie primaire 17A. Ce tourillon R est relié au corps 36 par la roue dentée 24.

La partie intermédiaire 17C est encore munie d'une seconde extrémité formant une tête 37 circulaire filetée dont le diamètre est complémentaire du diamètre D1 de la première portion 30 de la partie secondaire 17B. Cette tête 37 se raccorde au corps 36 par un rétrécissement formant col 38.

De préférence, le corps cylindrique fileté 36, le tourillon R, la roue dentée 24, la tête 37 et le col 38 forment une seule et même pièce.

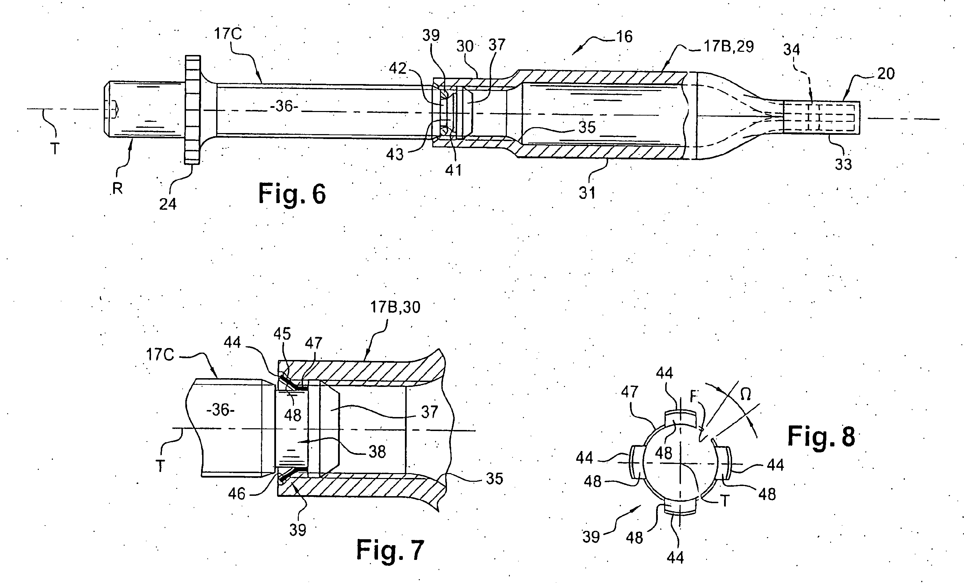

Les moyens de blocage 28 comportent un anneau déformable 39 rapporté sur la partie intermédiaire 17C de l'entretoise 16. De préférence, l'anneau 39 est déformable élastiquement entre une configuration de repos dans laquelle il fait saillie radialement par rapport au contour externe du corps 36 (voir figure 5) et une configuration d'escamotage dans laquelle il est en retrait radialement par rapport au contour externe du corps 36 ou affleure sensiblement ce contour externe du corps 36 (voir figure 6).

Dans l'exemple illustré sur les figures 2 à 6, l'anneau 39 est un jonc métallique (ou en matière plastique rigide tel qu'un nylon) fendu en 40. Ce jonc 39, élastiquement déformable radialement, est monté coulissant axialement sur le col 38.

Le col 38 présente une première portion 41 cylindrique ayant un premier diamètre, adjacente à la tête 37, ce premier diamètre étant sensiblement égal au diamètre intérieur du jonc 39 en l'absence de sollicitation de ce jonc (jonc 39 au repos).

Le col 38 présente également une seconde portion 42 cylindrique d'un deuxième diamètre, adjacente au corps 36, ce deuxième diamètre étant inférieur au diamètre intérieur du jonc 39 de façon à autoriser le rétrécissement radial de ce jonc (jonc 39 escamoté).

Les portions cylindriques 41, 42 sont reliées par une portion intermédiaire 43 conique formant rampe.

Le jonc 39 présente, du côté du corps 36, une surface d'appui 44 annulaire et, du côté de la tête 37, une surface conique 45 propre à coopérer avec un chanfrein intérieur 46, formant rampe, ménagé à l'extrémité débouchante de la première portion tubulaire 30 de la partie secondaire de l'entretoise 16.

Le montage de la partie intermédiaire 17C dans la partie secondaire 17B est effectué comme suit.

On commence par introduire et visser la tête 37 dans la première portion tubulaire 30 de la partie secondaire 17B, jusqu'à ce que la surface conique 45 du jonc 39 vienne buter contre le chanfrein 46, ce qui vient plaquer le jonc 39 contre le corps 36, au droit de la seconde portion cylindrique 42 (voir figure 5).

En poursuivant le vissage de la partie intermédiaire 17C dans la partie secondaire 17B, on fait glisser la surface conique 45 du jonc 39 sur le chanfrein 46 pour forcer ce jonc 39 à se rétracter radialement. Ceci est permis, d'une part, par le jeu radial prévu entre la surface intérieure du jonc 39 et la seconde portion cylindrique 42 et, d'autre part, par la fente 40. L'ouverture angulaire Ω de la fente 40 est définie par exemple de façon que le contour interne du jonc 39 rétracté coopère avec la seconde portion cylindrique 42.

Le contour externe du jonc 39 rétracté a un diamètre réduit autorisant la poursuite du vissage de la partie intermédiaire 17C dans la partie secondaire 17B (voir figure 6).

Lorsque, au cours du vissage de la partie intermédiaire 17C, le jonc 39 atteint l'épaulement 35, ce jonc 39 se déploie radialement pour coopérer à glissement avec la surface intérieure lisse de la seconde portion tubulaire 31 de la partie secondaire 17B.

Le cas échéant, on poursuit le vissage de la partie intermédiaire 17C dans la partie secondaire 17B jusqu'à ce que l'entretoise 16 ait par exemple la longueur minimale requise (voir figure 3) avant montage dans le frein 1.

Comme décrit plus haut, au fur et à mesure que le frein s'use, les moyens de réglage 23 allongent l'entretoise 16 par dévissage de la partie intermédiaire 17C par rapport à la partie secondaire 17B.

La course de dévissage de la partie intermédiaire 17C est néanmoins limitée par la coopération de la surface d'appui annulaire 44 du jonc 39 avec l'épaulement 35.

Par effet de collet, comme cela est illustré sur la figure 2, la surface d'appui 44 du jonc 39 bute contre l'épaulement 35 sans que le jonc 39 puisse se rétracter radialement et franchir cet épaulement 35. Le cas échéant, le jonc 39 se rétracte légèrement jusqu'à venir en prise avec les filets ménagés dans la première portion tubulaire 30, ce qui provoque le blocage axial de la partie intermédiaire 17C.

L'épaulement 35 forme ainsi une surface de butée de fin de course qui empêche tout dévissage supplémentaire de la partie intermédiaire 17C par rapport à la partie secondaire 17B.

La course de dévissage de la partie intermédiaire 17C par rapport à la partie secondaire 17B est prévue en fonction du seuil d'usure des garnitures 9, 10 à ne pas dépasser. Ce seuil est prédéterminé pour chaque frein, en fonction notamment de l'épaisseur des garnitures 9, 10.

Lorsque ce seuil est dépassé, la longueur de l'entretoise 16 reste constante indépendamment de l'usure des garnitures. Par conséquent, lors des opérations successives de freinage, la course centrifuge des mâchoires 5, 6 augmente sensiblement. Il en résulte une augmentation de la course de la pédale de frein incitant le conducteur à réviser le frein.

Suivant une variante de réalisation des moyens de blocage 28, illustré sur les figures 7 et 8 (dans lesquelles les éléments analogues à ceux des figures précédentes sont désignés par des références identiques), le col 38 a un diamètre constant et l'anneau 39 est une rondelle en tôle (ou en matière plastique suffisamment rigide).

La rondelle 39 comporte une portion cylindrique 47 entourant le col 38. Cette portion cylindrique 47 a un contour interrompu en F par une fente d'ouverture angulaire Ω.

La portion cylindrique 47 est prolongée en direction du corps 36 par une portion conique déformable élastiquement radialement.

Comme cela est visible sur la figure 8, la portion conique comprend au moins deux, de préférence quatre, languettes 48 divergentes vers le corps 36. Ces languettes 48, prolongeant axialement la portion cylindrique 47, sont uniformément réparties sur la circonférence de cette portion cylindrique 47.

Les languettes 48 sont munies d'extrémités libres formant la surface d'appui 44 destinée, comme décrit précédemment à propos du jonc 39, à venir s'appliquer contre l'épaulement 35 en fin de course de dévissage de la partie intermédiaire 17C.

Les languettes divergentes 48 délimitent en outre la surface conique 45 qui, lorsque la partie intermédiaire 17C est vissée dans la partie secondaire 17B, coopère avec le chanfrein 46 pour escamoter les languettes 48 par déformation radiale. L'escamotage des languettes 48 permet le passage de la rondelle 39 dans la portion filetée 30. Les languettes 48 sont rappelées élastiquement en position déployée lorsque la rondelle 39 atteint la seconde portion tubulaire 31.

## Revendications

1. Dispositif (15) de rattrapage automatique d'usure d'un frein à tambour (1), du type comportant :
- une entretoise (16), destinée à relier des première (5) et seconde mâchoires (6) du frein à tambour, comportant au moins des première (17C) et deuxième (17B) parties montées déplaçables axialement l'une par rapport à l'autre, et
- des moyens (23) de réglage de la longueur de l'entretoise (16) par déplacement relatif axial des première (17C) et deuxième (17B) parties de l'entretoise (16), les première (17C) et deuxième (17B) parties de l'entretoise (16) comportant des moyens complémentaires de limitation de la course d'allongement de l'entretoise (16), dits moyens de blocage (28), les moyens de blocage (17B) comportant une surface d'appui (44), portée par la première partie (17C) de l'entretoise, destinée à coopérer avec une surface de butée de fin course (35) portée par la deuxième partie (17B) de l'entretoise (16), la deuxième partie (17B) présentant un corps (29) tubulaire dans lequel est emboîtée la première partie (17C), la surface de butée (35) est formée par un épaulement annulaire ménagé dans la seconde partie (17B), **caractérisé en ce que** la première partie (17C) de l'entretoise (16) porte un anneau (39) sur lequel est formée la surface d'appui (44).

2. Dispositif selon la revendication 1, **caractérisé en ce que** l'anneau (39) est déformable élastiquement radialement et monté coulissant sur un rétrécissement formant un col (38) ménagé sur la première partie (17C) de l'entretoise (16).

3. Dispositif selon la revendication 2, **caractérisé en ce que** la première partie (17C) de l'entretoise (16) est munie d'un corps cylindrique (36) prolongé, à l'une de ses extrémités, par une tête (37) qui se raccorde au corps (36) par le col (38).

4. Dispositif selon la revendication 3, **caractérisé en ce que** l'anneau (39) est un jonc élastique, et **en ce que** le col (38) présente :
- une première portion cylindrique (41) ayant un premier diamètre, adjacente à la tête (37) de la première partie (17C), ce premier diamètre étant sensiblement égal au diamètre intérieur du jonc (39) en l'absence de sollicitation de ce jonc,
- une seconde portion cylindrique (42) d'un deuxième diamètre plus petit que ledit premier diamètre, adjacente au corps (36) de la première partie (17C), ce petit diamètre étant inférieur au diamètre intérieur du jonc (39) de façon à autoriser le rétrécissement radial de ce jonc,
les portions de premier (41) et deuxième (42) diamètres étant reliées par une portion intermédiaire (43) conique.

5. Dispositif selon la revendication 3, **caractérisé en ce que** le col (38) est cylindrique de diamètre sensiblement constant, et **en ce que** l'anneau (39) est formé par une rondelle en tôle présentant une portion cylindrique (47), entourant le col (38), prolongée vers le corps (36) par une portion conique (48) déformable élastiquement.

6. Dispositif selon l'une quelconque des revendications 1 à 5, **caractérisé en ce que** les première (17C) et deuxième (17B) parties de l'entretoise sont en prise par vissage.

7. Dispositif selon la revendication 6, prise en combinaison avec l'une quelconque des revendications 3 à 5, **caractérisé en ce que** la deuxième partie (17B) de l'entretoise (16) présente une première portion tubulaire (30) dont la surface intérieure est filetée, prolongée par une seconde portion tubulaire (31) dont la surface intérieure est lisse et dont le diamètre intérieur (D2) est supérieur au diamètre intérieur (D1) de la première portion tubulaire, **en ce que** les première (30) et seconde (31) portions de la deuxième partie (17B) de l'entretoise (16) sont reliées par l'épaulement (35) formant butée, et **en ce que** le corps (36) de la première partie (17C) de l'entretoise (16) est fileté pour venir en prise par vissage avec la première portion (30) de la deuxième partie (17B) de l'entretoise (16).

8. Dispositif selon la revendication 7, **caractérisé en ce que** la première portion tubulaire (30) présente une extrémité débouchante munie d'un chanfrein (46), et **en ce que** l'anneau (39) présente une surface (45) conique propre à coopérer avec ce chanfrein (46) de manière à provoquer un rétrécissement radial de l'anneau (39) pour permettre le vissage du corps (36) de la première partie (17C) dans la première portion tubulaire (30) de la deuxième partie (17B).

9. Dispositif selon l'une quelconque des revendications 1 à 8, **caractérisé en ce que** les moyens de réglage (23) comportent une roue dentée (24), solidaire en rotation de la première (17C) ou deuxième (17B) partie de l'entretoise (16), apte à coopérer avec un cliquet (25) porté par une des mâchoires (5) du frein (1).

10. Dispositif selon l'une quelconque des revendications 1 à 9, **caractérisé en ce que** l'entretoise (16) comporte de plus une troisième partie montée rotative, relativement à la première (17C) ou deuxième (17B) partie de l'entretoise (16), autour d'un axe sensiblement parallèle à l'axe d'allongement de l'entretoise (16), la troisième partie de l'entretoise (16) étant destinée à être montée sur l'une des mâchoires (5, 6), la deuxième (17B) ou première (17C) partie de l'entretoise (16) étant destinée à être reliée respectivement à l'autre des mâchoires (5, 6).

11. Dispositif selon les revendications 9 et 10 prises ensemble, **caractérisé en ce que** la roue dentée (24) est délimitée par un épaulement d'appui axial destiné à coopérer avec un épaulement d'appui axial complémentaire délimitant une extrémité de la troisième partie de l'entretoise (16).

12. Frein (1) à tambour (3) pour véhicule automobile du type comportant deux mâchoires (5, 6) sensiblement diamétralement opposées par rapport à l'axe (X) du tambour (3), destinées à être serrées contre ce tambour (3), **caractérisé en ce qu'**il comprend un dispositif (15) de rattrapage automatique d'usure selon l'une quelconque des revendications 1 à 11, la première (17C) ou deuxième (17B) partie de l'entretoise (16) étant reliée à une des mâchoires (5, 6).

## Claims

1. Device (15) for automatic uptake of wear of a drum brake (1), of the type comprising:
- a crosspiece (16), designed to connect a first shoe (5) and a second shoe (6) of the drum brake, comprising at least a first part (17C) and second part (17B) mounted so as to be movable axially relative to one another, and
- means (23) for adjusting the length of the crosspiece (16) by relative axial movement of the first part (17C) and second part (17B) of the crosspiece (16), the first part (17C) and second part (17B) of the crosspiece (16) comprising complementary means of limiting the lengthening travel of the crosspiece (16), called blocking means (28), the blocking means (28) comprising a bearing surface (44), supported by the first part (17C) of the crosspiece, designed to interact with an end of travel abutment surface (35) supported by the second part (17B) of the crosspiece (16), the second part (17B) having a tubular body (29) in which the first part (17C) is nested, the abutment surface (35) being formed by an annular shoulder made in the second part (17B), **characterized in that** the first part (17C) of the crosspiece (16) supports a ring (39) on which the bearing surface (44) is formed.

2. Device according to Claim 1, **characterized in that** the ring (39) is radially elastically deformable and mounted so as to slide on a narrowing forming a neck (38) made on the first part (17C) of the crosspiece (16).

3. Device according to Claim 2, **characterized in that** the first part (17C) of the crosspiece (16) is furnished with a cylindrical body (36) extended, at one of its ends, by a head (37) that is connected to the body (36) by the neck (38).

4. Device according to Claim 3, **characterized in that** the ring (39) is an elastic retaining ring, and **in that** the neck (38) has:
- a first cylindrical portion (41) having a first diameter, adjacent to the head (37) of the first part (17C), this first diameter being substantially equal to the internal diameter of the retaining ring (39) in the absence of pressure on this retaining ring,
- a second cylindrical portion (42) of a second diameter smaller than said first diameter, adjacent to the body (36) of the first part (17C), this small diameter being less than the internal diameter of the retaining ring (39) in order to allow the radial contraction of this retaining ring,
- the portions of first diameter (41) and second diameter (42) being connected by a conical intermediate portion (43).

5. Device according to Claim 3, **characterized in that** the neck (38) is cylindrical of substantially constant diameter, and **in that** the ring (39) is formed by a metal sheet washer having a cylindrical portion (47), surrounding the neck (38), extended towards the body (36) by an elastically deformable conical portion (48).

6. Device according to any one of Claims 1 to 5, **characterized in that** the first part (17C) and second part (17B) of the crosspiece are engaged by screwing.

7. Device according to Claim 6, taken in combination with any one of Claims 3 to 5, **characterized in that** the second part (17B) of the crosspiece (16) has a first tubular portion (30), whose internal surface is threaded, extended by a second tubular portion (31) whose internal surface is smooth and whose internal diameter (D2) is greater than the internal diameter (D1) of the first tubular portion, **in that** the first portion (30) and second portion (31) of the second part (17B) of the crosspiece (16) are connected via the shoulder (35) forming a stop, and **in that** the body (36) of the first part (17C) of the crosspiece (16) is threaded in order to engage by screwing with the first portion (30) of the second part (17B) of the crosspiece (16).

8. Device according to Claim 7, **characterized in that** the first tubular portion (30) has an open end furnished with a bevel (46), and **in that** the ring (39) has a conical surface (45) capable of interacting with this bevel (46) in order to cause a radial contraction of the ring (39) in order to allow the body (36) of the first part (17C) to be screwed into the first tubular portion (30) of the second part (17B).

9. Device according to any one of Claims 1 to 8, **characterized in that** the adjustment means (23) comprise a sprocket wheel (24), fixedly attached in rotation to the first part (17C) or second part (17B) of the crosspiece (16), capable of interacting with a pawl (25) supported by one of the shoes (5) of the brake (1).

10. Device according to any one of Claims 1 to 9, **characterized in that** the crosspiece (16) also comprises a third part mounted so as to rotate, relative to the first part (17C) or second part (17B) of the crosspiece (16), about an axis substantially parallel to the axis of lengthening of the crosspiece (16), the third part of the crosspiece (16) being designed to be mounted on one of the shoes (5, 6), the second part (17B) or first part (17C) of the crosspiece (16) being designed to be connected respectively to the other of the shoes (5, 6).

11. Device according to Claims 9 and 10 taken together, **characterized in that** the sprocket wheel (24) is delimited by an axial bearing shoulder designed to interact with a matching axial bearing shoulder delimiting one end of the third part of the crosspiece (16).

12. Brake (1) with drum (3) for a motor vehicle of the type comprising two shoes (5, 6) substantially diametrically opposed relative to the axis (X) of the drum (3), designed to be tightened against this drum (3), **characterized in that** it comprises a device (15) for automatic uptake of wear according to any one of Claims 1 to 11, the first part (17C) or second part (17B) of the crosspiece (16) being connected to one of the shoes (5, 6).

## Patentansprüche

1. Vorrichtung (15) für den automatischen Ausgleich des Verschleißes einer Trommelbremse (1), vom Typ mit:
- einem Zwischenelement (16), das dazu vorgesehen ist, eine erste Bremsbacke (5) und eine zweite Bremsbacke (6) der Trommelbremse zu verbinden, und das mindestens einen ersten Teil (17C) und einen zweiten Teil (17B) aufweist, die axial zueinander verschiebbar angebracht sind,
- Mitteln (23) zum Einstellen der Länge des Zwischenelements (16) durch die relative axiale Verschiebung zwischen dem ersten Teil (17C) und dem zweiten Teil (17B) des Zwischenelements (16), wobei der erste Teil (17C) und der zweite Teil (17B) des Zwischenelements (16) komplementäre Mittel zur Begrenzung des Verlängerungswegs des Zwischenelements (16), die Blockierungsmittel (28) genannt werden, aufweisen, wobei die Blockierungsmittel (17B) eine Anlagefläche (44) aufweisen, die von dem ersten Teil (17C) des Zwischenelements getragen und dazu vorgesehen ist, mit einer von dem zweiten Teil (17B) des Zwischenelements (16) getragenen Endstellungsanschlagfläche (35) zusammenzuwirken, wobei der zweite Teil (17B) einen rohrförmigen Körper (29) aufweist, in den der erste Teil (17C) eingeschoben ist, wobei die Anschlagfläche (35) durch einen im zweiten Teil (17B) ausgebildeten ringförmigen Absatz gebildet ist, **dadurch gekennzeichnet, dass** der erste Teil (17C) des Zwischenelements (16) einen Ring (39) trägt, an dem die Anlagefläche (44) ausgebildet ist.

2. Vorrichtung nach Anspruch 1, **dadurch gekennzeichnet, dass** der Ring (39) radial elastisch verformbar und an einer Verengung gleitend angebracht ist, die einen Kragen (38) bildet, der am ersten Teil (17C) des Zwischenelements (16) ausgebildet ist.

3. Vorrichtung nach Anspruch 2, **dadurch gekennzeichnet, dass** der erste Teil (17C) des Zwischenelements (16) mit einem zylindrischen Körper (36) versehen ist, der an einem seiner Enden durch einen Kopf (37) verlängert ist, der über den Kragen (38) mit dem Körper (36) verbunden ist.

4. Vorrichtung nach Anspruch 3, **dadurch gekennzeichnet, dass** der Ring (39) ein elastischer Reif ist und der Kragen (38) folgendes aufweist:
- einen ersten zylindrischen Abschnitt (41), der einen ersten Durchmesser besitzt und an den Kopf (37) des ersten Teils (17C) angrenzt, wobei dieser erste Durchmesser im Wesentlichen dem Innendurchmesser des Reifs (39) entspricht, wenn dieser Reif nicht beansprucht wird,
- einen zweiten zylindrischen Abschnitt (42), der einen zweiten Durchmesser besitzt, welcher kleiner ist als der erste Durchmesser, und der an den Körper (36) des ersten Teils (17C) angrenzt, wobei dieser kleine Durchmesser kleiner ist als der Innendurchmesser des Reifs (39), so dass sich dieser Reif radial zusammenziehen kann,
wobei der Abschnitt (41) mit dem ersten Durchmesser und der Abschnitt (42) mit dem zweiten Durchmesser über einen konischen Zwischenabschnitt (43) verbunden sind.

5. Vorrichtung nach Anspruch 3, **dadurch gekennzeichnet, dass** der Kragen (38) zylindrisch ist und einen im Wesentlichen konstanten Durchmesser besitzt und der Ring (39) durch eine kleine Scheibe aus Blech mit einem zylindrischen Abschnitt (47) gebildet ist, die den Kragen (38) umgibt und durch einen elastisch verformbaren konischen Abschnitt (48) zum Körper (36) verlängert ist.

6. Vorrichtung nach einem der Ansprüche 1 bis 5, **dadurch gekennzeichnet, dass** der erste Teil (17C) und der zweite Teil (17B) des Zwischenelements durch Verschraubung in Eingriff sind.

7. Vorrichtung nach Anspruch 6, in Kombination mit einem der Ansprüche 3 bis 5, **dadurch gekennzeichnet, dass** der zweite Teil (17B) des Zwischenelements (16) einen ersten rohrförmigen Abschnitt (30) aufweist, dessen Innenfläche mit einem Gewinde versehen ist und der durch einen zweiten rohrförmigen Abschnitt (31) verlängert ist, dessen Innenfläche glatt ist und der Innendurchmesser (D2) größer ist als der Innendurchmesser (D1) des ersten rohrförmigen Abschnitts, dass der erste Abschnitt (30) und der zweite Abschnitt (31) des zweiten Teils (17B) des Zwischenelements (16) über den einen Anschlag bildenden Absatz (35) verbunden sind und dass der Körper (36) des ersten Teils (17C) des Zwischenelements (16) mit einem Gewinde versehen ist, um durch Verschraubung mit dem ersten Abschnitt (30) des zweiten Teils (17B) des Zwischenelements (16) in Eingriff zu gelangen.

8. Vorrichtung nach Anspruch 7, **dadurch gekennzeichnet, dass** der erste rohrförmige Abschnitt (30) ein mit einer Abschrägung (46) versehenes ausmündendes Ende aufweist und der Ring (39) eine konische Fläche (45) aufweist, die mit dieser Abschrägung (46) zusammenwirken kann, so dass ein radiales Zusammenziehen des Rings (39) bewirkt wird, um das Einschrauben des Körpers (36) des ersten Teils (17C) in den ersten rohrförmigen Abschnitt (30) des zweiten Teils (17B) zu ermöglichen.

9. Vorrichtung nach einem der Ansprüche 1 bis 8, **dadurch gekennzeichnet, dass** die Einstellmittel (23) ein Zahnrad (24) aufweisen, das mit dem ersten Teil (17C) oder mit dem zweiten Teil (17B) des Zwischenelements (16) drehfest ist und mit einer Sperre (25) zusammenwirken kann, die von einer der Bremsbacken (5) der Bremse (1) getragen ist.

10. Vorrichtung nach einem der Ansprüche 1 bis 9, **dadurch gekennzeichnet, dass** das Zwischenelement (16) darüber hinaus einen dritten Teil aufweist, der bezüglich des ersten Teils (17C) oder des zweiten Teils (17B) des Zwischenelements (16) um eine zur Verlängerungsachse des Zwischenelements (16) im Wesentlichen parallele Achse drehbar angebracht ist, wobei der dritte Teil des Zwischenelements (16) dazu vorgesehen ist, an einer der Bremsbacken (5, 6) angebracht zu sein und der zweite Teil (17B) oder der erste Teil (17C) des Zwischenelements (16) dazu vorgesehen ist, mit der jeweils anderen der Bremsbacken (5, 6) verbunden zu sein.

11. Vorrichtung nach den Ansprüchen 9 und 10 in Kombination, **dadurch gekennzeichnet, dass** das Zahnrad (24) durch einen axialen Anlageabsatz begrenzt ist, der dazu vorgesehen ist, mit einem komplementären axialen Anlageabsatz zusammenzuwirken, der ein Ende des dritten Teils des Zwischenelements (16) begrenzt.

12. Bremse (1) mit Trommel (3) für ein Kraftfahrzeug, vom Typ mit zwei Bremsbacken (5, 6), die bezüglich der Achse (X) der Trommel (3) im Wesentlichen diametral entgegengesetzt angeordnet und dazu vorgesehen sind, gegen diese Trommel (3) gepresst zu werden, **dadurch gekennzeichnet, dass** sie eine Vorrichtung (15) für den automatischen Verschleißausgleich nach einem der Ansprüche 1 bis 11 aufweist, wobei der erste Teil (17C) oder der zweite Teil (17B) des Zwischenelements (16) mit einer der Bremsbacken (5, 6) verbunden ist.
